# EUROPÄISCHE PATENTSCHRIFT

(11) **EP 3 529 138 B1**
(45) Veröffentlichungstag und Bekanntmachung des Hinweises auf die Patenterteilung: **24.06.2020**
(21) Anmeldenummer: 17761856.8
(22) Anmeldetag: 31.08.2017
(51) Int. Cl.: B62J 25/04, B62K 21/18, B62J 27/30

(54) **SCOOTER MIT FUSSABLAGENANORDNUNG**
SCOOTER WITH FOOT REST ARRANGEMENT
SCOOTER COMPRENANT UN ENSEMBLE REPOSE-PIED

(30) Priorität: 18.10.2016 DE 102016220383
(43) Veröffentlichungstag der Anmeldung: 28.08.2019
(73) Patentinhaber: Bayerische Motoren Werke Aktiengesellschaft, 80809 München (DE)
(72) Erfinder: AUGUSTIN, Stephan, 80804 Muenchen (DE); GRUENWALD, Ernst, 80935 München (DE)
(86) Internationale Anmeldenummer: PCT/EP2017/071835
(87) Internationale Veröffentlichungsnummer: WO 2018/072918

(56) Entgegenhaltungen:
- WO-A1-2014/154295
- US-A- 4 685 694

## Beschreibung

Die Erfindung betrifft einen Scooter mit einer Fußablagenanordnung gemäß dem Oberbegriff des Patentanspruchs 1.

Für Motorräder oder motorradähnliche Fahrzeuge, wie zwei- oder mehrrädrige Motorroller (im Folgenden auch als motorisierter Scooter oder lediglich Scooter bezeichnet), sind verschiedene Varianten von Fußablagen beziehungsweise von Trittbrettern bekannt, um dem Fahrer während der Fahrt die Möglichkeit zu bieten, seine Füße sicher und komfortabel zu platzieren.

Für Motorräder kommen meist kleine, seitlich am Fahrzeug angebrachte und im Betriebszustand ausklappbare Fußrasten zum Einsatz.

Dagegen steht bei Motorrollern eine vergleichsweise große Fußablage für die Füße des Fahrers zur Verfügung, die meistens nahezu parallel oder leicht angewinkelt zur Fahrbahn angeordnet ist. Diese befindet sich zwischen einem Lenkerbereich und einem Fahrersitz, oder ist seitlich am Motorroller integriert. Eine entsprechende Anordnung ist zum Beispiel aus der DE 196 29 879 A1 bekannt.

Derartige Fußablageflächen weisen jedoch die Eigenschaft auf, dass sie lediglich für eine aufrechte oder nach vorn gebeugte Sitzposition des Fahrers ergonomisch geeignet sind und eine entsprechend senkrechte oder zumindest annähernd senkrechte Positionierung der Unterschenkel des Fahrers bezüglich einer Fahrzeuglängsrichtung erfordern. Diese geometrischen Auslegungen sind jedoch nur für Fahrer mittlerer Größe zu erfüllen. Dagegen ist bei sehr großen oder sehr kleinen Fahrern die ergonomische Nutzung des Fahrzeugs beeinträchtigt.

Auch aus der DE 699 285 T2 ist eine Fußstützenanordnung sowohl für einen Fahrer als auch für einen Sozius bekannt. Diese erstreckt sich zwischen dem Lenkerbereich und einem Hinterradbereich mit einer in dieser Richtung ansteigenden Höhe, so dass eine ergonomische Sitzposition schwer realisierbar ist.

Neben den ergonomischen Aspekten spielt die Anordnung und Ausführung der Fußablage grundsätzlich eine sicherheitsrelevante Rolle. So muss der Fahrer zum Anhalten des Fahrzeugs die Füße zunächst von der Fußablage abheben und seitlich von der Fußablage den Bodenkontakt suchen, um die Füße abzustellen. Je nach Körpergröße des Fahrers und Größe der Fußablagen kann dies bedeuten, dass der Fahrer lediglich mit seinen Zehenspitzen die Fahrbahn berührt und so eine Standstabilität erheblich eingeschränkt ist. Zusätzlich besteht die Gefahr, dass beim Umkippen des Fahrzeuges der Fuß des Fahrers zwischen der Fahrbahn und der Fußablage eingeklemmt wird.

Die genannten Nachteile sind ebenfalls relevant bei Motorrollern beziehungsweise Scootern, die über eine Sitzanordnung verfügen, bei welcher der Sitz und die Sitzposition bereits auf eine verbesserte Ergonomie ausgelegt sind. Hierzu zählen insbesondere auch entsprechende Fahrzeuge, die zusätzlich mit einer "entkoppelten" Lenkanordnung ausgestattet sind. Bei diesen Fahrzeugen ist eine lenkbare Vorderradführung um eine erste Drehachse drehbar gelagert und eine Lenksäule um eine zweite Drehachse drehbar, wobei die Lenksäule und die Vorderradführung zueinander beabstandet angeordnet sind. Anders dargestellt, sind also die erste und die zweite Drehachse nicht-koaxial ausgerichtet. Eine Übertragung einer Lenkbewegung erfolgt über ein Übertragungsmittel, welches die Lenksäule mit der Vorderradführung wirkkoppelnd miteinander verbindet.

Zum Beispiel ist aus der gattungsgemäßen US 4,685,694 A ein Scooter mit einer entkoppelten Lenkanordnung bekannt. Ein Fahrzeugrahmen eines Scooters mit Schutzfunktion ist aus der WO 2014/154295 A1 bekannt.

Eine Aufgabe der Erfindung ist es daher eine Fußablagenanordnung zu schaffen, mit der die genannten Nachteile zumindest teilweise reduziert werden können, insbesondere eine möglichst ergonomische Fußablageanordnung für ein motorisiertes Fahrzeug, wie einen Scooter, mit "entkoppelter" Lenkung zu schaffen.

Diese Aufgabe wird gelöst mit einem Motorroller beziehungsweise Scooter mit den Merkmalen des Patentanspruchs 1. Vorteilhafte Ausführungsformen ergeben sich aus den hiervon abhängigen Patentansprüchen.

Demnach wird ein Scooter bereitgestellt, mit einer Fußablagenanordnung, die eine linke Fußablagefläche und eine rechte Fußablagefläche umfasst, sowie mit einer lenkbaren Vorderradführung, die in einem Steuerrohr um eine erste Drehachse drehbar gelagert ist, und einer um eine zweite Drehachse drehbaren Lenksäule, wobei die Lenksäule und die Vorderradführung zueinander beabstandet angeordnet und zum Übertragen einer Lenkbewegung miteinander wirkgekoppelt sind. Die zweite Drehachse schneidet die Fußablagenanordnung in einem Schnittpunkt derart, dass die linke und rechte Fußablagefläche jeweils seitlich zu dem Schnittpunkt angeordnet sind.

Der Scooter weist also eine "entkoppelte" Lenkanordnung auf, bei der die erste Drehachse der Vorderradführung nicht-koaxial zu der zweiten Drehachse der Lenksäule angeordnet ist. Diese Lenkanordnung bietet beispielsweise im Gegensatz zu üblichen, direkten Lenkanordnungen bekannter Motorroller die grundsätzliche Möglichkeit, einen Radstand des Scooters und somit eine Sitzposition des Fahrers bedarfsgerecht zu definieren. Insbesondere kann der Radstand länger gewählt werden als im Vergleich zu üblichen Lenkanordnungen bekannter Motorroller, wodurch ein Fahrzeugkonzept mit besonders ergonomischer und dennoch sicherer Sitzposition für den Fahrer bereitgestellt werden kann. Dieser kann eine aufrechte oder sogar eine (in Fahrzeuglängsrichtung beziehungsweise Fahrtrichtung betrachtet) nach hinten zurückgelehnte Sitzposition einnehmen. Um die Füße des Fahrers hierbei sicher zu stützen, sind die beiden Fußablageflächen im Bereich des Schnittpunktes vorgesehen. Deren Anordnung seitlich (also links beziehungsweise rechts) zu der zweiten Drehachse, also der Drehachse der Lenksäule, ermöglicht hierbei eine besonders vorteilhafte, ergonomische Sitzposition.

Die zweite Drehachse definiert eine Gerade, welche die Fußablagenanordnung beziehungsweise eine Oberfläche der Fußablagenanordnung in dem Schnittpunkt schneidet. Zu beiden Seiten des Schnittpunktes, bezogen auf eine Fahrzeuglängsrichtung, links und rechts des Schnittpunktes sind die linke beziehungsweise die rechte Fußablagefläche angeordnet. Der Schnittpunkt kann durch die zweite Drehachse entweder rein virtuell oder als tatsächlicher Schnittpunkt einer die Lenksäule drehbar aufnehmenden Lagerung definiert sein, beispielsweise eines Rohrabschnittes einer Fahrzeugstruktur. Im Falle des Rohrabschnittes kann dieser mit der Fußablagenanordnung verbunden sein und sich von dieser weg erstrecken, um an einem entfernten Ende die Lenksäule beziehungsweise den Lenker drehbar aufzunehmen.

Jedenfalls ist sichergestellt, dass sich die beiden Fußablageflächen beziehungsweise die gesamte Fußablagenanordnung hinter dem Steuerrohr des Scooters befinden.

Gemäß bevorzugter Ausführungsformen sind die erste und zweite Drehachse parallel beabstandet zueinander oder miteinander kreuzend ausgerichtet.

Des Weiteren kann die Fußablagenanordnung in einem ersten Abschnitt von dem Schnittpunkt in Richtung des Steuerrohrs erstreckt ausgestaltet sein, insbesondere kann die Fußablagenanordnung mit einem vorderen Ende mit dem Steuerrohr verbunden sein. Dementsprechend ist zumindest der erste Abschnitt der Fußablagenanordnung zwischen dem Schnittpunkt und dem Steuerrohr, und somit im Wesentlichen vor dem Lenker, angeordnet. Die optionale Verbindung der Fußablagenanordnung mit dem Steuerrohr ermöglicht eine besonders große beziehungsweise lange Ausgestaltung der Fußablagenanordnung inklusive der linken und rechten Fußablageflächen, in Abhängigkeit des Abstands des Steuerrohres zu dem Schnittpunkt. Mit Hilfe der auf diese Weise bereitgestellten langerstreckten Fußablagenanordnung ist eine besonders vorteilhafte, freie Positionierbarkeit der Füße für stark unterschiedliche Fahrergrößen, selbst bei gleichbleibender Sitzposition, möglich.

Alternativ hierzu oder zusätzlich kann die Fußablagenanordnung in einem zweiten Abschnitt von dem Schnittpunkt in Richtung eines Fahrzeughecks des Scooters erstreckt sein. Dementsprechend kann die Fußablagenanordnung beziehungsweise deren linke und rechte Fußablagefläche in der Fahrzeuglängsrichtung in Richtung des Fahrzeughecks, also entgegen der Fahrtrichtung, ausgedehnt sein. Dies bedeutet, dass der zweite Abschnitt lediglich in Richtung des Fahrzeughecks oder bis zu dem Fahrzeugheck erstreckt ist.

In jedem Fall wird auf diese Weise eine langerstreckte Fußablagenanordnung bereitgestellt, die eine freie Positionierbarkeit des Fahrerfußes ermöglicht. In Verbindung mit dem optionalen ersten Abschnitt wird diese nochmals zusätzlich verbessert.

Gemäß einer weiteren bevorzugten Ausführungsform sind der erste Abschnitt der Fußablagenanordnung um einen ersten Winkel und/oder der zweite Abschnitt der Fußablagenanordnung um einen zweiten Winkel gekippt zu deren Fahrzeuglängsrichtung beziehungsweise der Fahrtrichtung angeordnet. Es können also entweder der erste Abschnitt oder der zweite Abschnitt oder beide gemeinsam gekippt zu einer Fahrbahn beziehungsweise zu der Fahrzeuglängsrichtung ausgerichtet sein. Auch können der erste Winkel und der zweite Winkel gleich oder unterschiedlich groß gewählt sein, insbesondere kann der erste Winkel größer als der zweite Winkel sein, so dass der erste Abschnitt eine stärkere Anstellung aufweist als der zweite Abschnitt.

Mit Hilfe des gekippten ersten und/oder zweiten Abschnitts, kann einerseits eine erhöhte Ergonomie für den Fahrer erzielt werden, da die Füße des Fahrers nicht parallel zu der Fahrzeuglängsachse beziehungswiese zu einer Fahrbahn positioniert werden. Die Anstellung ermöglicht stattdessen eine flache und (zumindest teilweise) gestreckte Positionierung der Beine des Fahrers und somit eine entsprechend tiefe und zurückgelehnte Sitzposition des Fahrers, sofern dies gewünscht ist.

Die jeweilige Abwinklung bewirkt aber auch, dass zumindest der erste Abschnitt als Schutzschild hinter dem Vorderrad des Scooters angeordnet ist, wodurch eine Crashsicherheit maßgeblich erhöht wird. Im Falle eines Frontalcrashs wird das Vorderrad gegen den ersten Abschnitt, genauer gegen dessen Unterseite, gedrückt und Richtung Fahrbahn beziehungsweise unter das Fahrzeug abgelenkt. Die Fußablagenanordnung verhindert bei entsprechender Festigkeit eine weitere Bewegung des Vorderrades in Richtung des Fahrers und seiner Beine. Eine Verletzungsgefahr wird also deutlich reduziert. Zusätzlich können auch im Normalbetrieb der erste Abschnitt und/oder der zweite Abschnitt als Schmutzabweiser gegen aufgewirbelten Schmutz wirken.

Des Weiteren können die linke und die rechte Fußablagefläche miteinander verbunden sein, um eine gemeinsame Ablagefläche der Fußablagenanordnung zu definieren.

Ferner kann der Schnittpunkt bezüglich der Fahrzeuglängsrichtung und/oder bezüglich einer Fahrzeugquerrichtung des Scooters im Wesentlichen in der Mitte der gemeinsamen Ablagefläche angeordnet sein. Dadurch ist sichergestellt, dass die Lenksäule in ihrer Verlängerung (die durch die zweite Drehachse definiert wird) mittig über der gemeinsamen Ablagefläche angeordnet ist. Diese Anordnung bietet eine besondere Flexibilität für eine breite Spanne von unterschiedlichen Körpergrößen des Fahrers, ohne dass spezielle Einstellvorrichtungen zur individuellen Geometrieänderung am Fahrzeug, wie beispielsweise eine Lenkerverstellung, vorgesehen werden müssen.

Außerdem kann eine sich an ein hinteres Ende der Fußablagenanordnung anschließende Fahrzeugstruktur eine geringere Breite aufweisen als eine maximale Breite der Fußablagenanordnung. Dies bedeutet, dass die Fußablagenanordnung zumindest an ihrer breitesten Stelle (also an der Stelle maximaler Breite) eine größere Breite aufweist als die Fahrzeugstruktur, die hinter der Fußablagenanordnung angeordnet ist. Nimmt als der Fahrer seine Füße von den Fußablageflächen, so kann er die Füße im Bereich der hinter der Fußablagenanordnung angeordneten Fahrzeugstruktur seitlich abstellen. Aufgrund der geringeren Breite der Fahrzeugstruktur können die Füße nahe am Fahrzeug positioniert werden, wodurch der Fahrer einen sicheren Stand behält, im Gegensatz zu einem sonst bei Motorrollern üblichen Stand auf Zehenspitzen aufgrund der größeren Breite des Fahrzeuges und dessen Fußablagen. Der Fahrer kann zudem die Straße in kürzester Zeit erreichen, indem er einfach seine Füße nach hinten von den Fußablageflächen zieht und in Richtung der Fahrbahn ablässt, um beispielsweise ein Umkippen zu verhindern.

Sollte ein seitliches Umkippen des Scooters dennoch auftreten, bietet die beschriebene Fußablagenanordnung aufgrund ihrer größeren Breite den Vorteil, dass diese als Sturzbügel wirkt. Liegt der Scooter auf einer seiner Fahrzeugseiten, so verbleibt für den Fuß und das Bein des Fahrers ein sicherer Freiraum beziehungsweise Schutzraum im Bereich der schmaleren Fahrzeugstruktur erhalten, so dass ein Einquetschen des Fußes oder des Unterschenkels in diesem Bereich verhindert werden kann.

Erfindungsgemäß umfasst die Fußablagenanordnung eine Rohrrahmenanordnung, welche zumindest eine seitliche Umfassung der linken und rechten Fußablagefläche bildet. Eine derartige Rohrrahmenanordnung bietet eine zusätzliche Stabilität für die gesamte Fußablagenanordnung und kann entsprechend als Schutz- beziehungsweise Sturzbügel wirken. Erfindungsgemäß fasst die Rohrrahmenanordnung die beiden Fußablageflächen seitlich ein, um diese vor Beschädigung zu schützen und den beschriebenen Schutzraum zu schaffen und im Bedarfsfalle zu erhalten.

Zusätzlich weist die Rohrrahmenanordnung ein linkes beziehungsweise ein rechtes Rohrelement auf, die jeweils mit einem vorderen Ende im Bereich des Steuerrohrs miteinander verbunden sind und/oder mit dem Steuerrohr verbunden sind.

Außerdem kann das linke und das rechte Rohrelement jeweils ein hinteres Ende aufweisen, welches mit der Fahrzeugstruktur des Scooters verbunden ist. Die beiden Rohrelemente stellen somit eine Verlängerung der Fahrzeugstruktur in die Fußablagenanordnung dar beziehungsweise verbinden die Fahrzeugstruktur und die Fußablagenanordnung miteinander. Vorzugsweise sind ein die Fahrzeugstruktur definierender Fahrzeugrahmen und zumindest die beiden Rohrelemente oder die gesamte Rohrrahmenanordnung einstückig zu einem gemeinsamen Bauteil miteinander verbunden.

Des Weiteren kann der Scooter vorzugsweise ein zweirädriger, dreirädriger oder vierrädriger Scooter sein.

Die Erfindung wird nachfolgend anhand eines Ausführungsbeispiels unter Bezugnahme auf die Zeichnungen näher erläutert. Es zeigen:
- Fig. 1: eine teilweise Seitenansicht eines Scooters gemäß der Beschreibung, und
- Fig. 2: eine Draufsicht auf eine Fußablagenanordnung gemäß der Beschreibung.

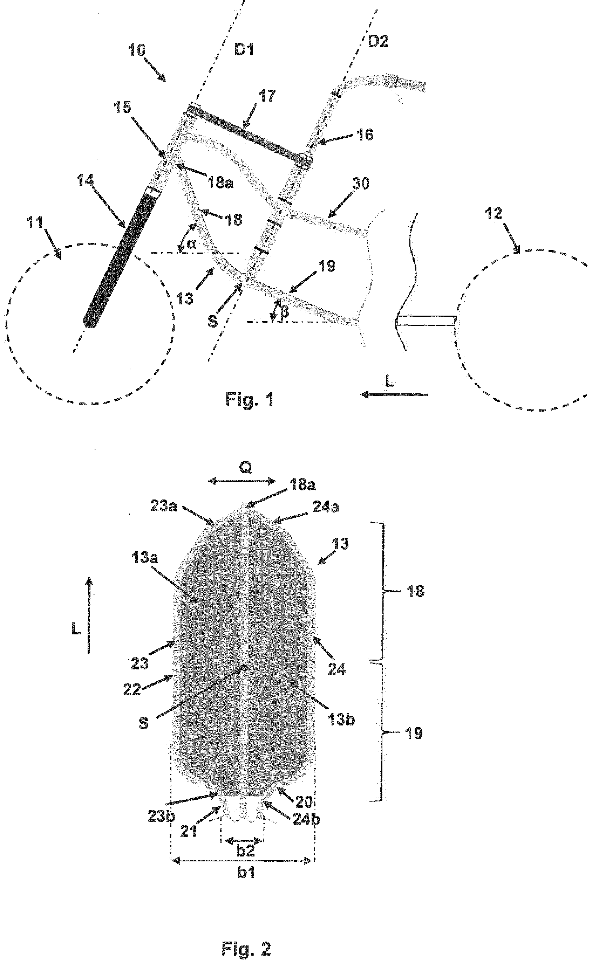

In Fig. 1 ist eine lediglich teilweise und schematische Seitenansicht eines Scooters 10 dargestellt, wobei die Positionen eines Vorderrads 11 und eines Hinterrads 12 lediglich angedeutet sind. Der Scooter 10 kann beispielsweise ein zweirädriger, dreirädriger oder vierrädriger Scooter sein.

In jedem Fall umfasst der Scooter 10 eine "entkoppelte" Lenkanordnung, bei der eine lenkbare Vorderradführung 14 eine Aufhängung und Führung des Vorderrades 11 definiert. Die Vorderradführung 14 ist in einem fahrzeugfesten Steuerrohr 15 um eine erste Drehachse D1 drehbar gelagert. Zusätzlich umfasst die Lenkanordnung eine um eine zweite Drehachse D2 drehbare Lenksäule 16, wobei die Vorderradführung 14 und die Lenksäule 16 zueinander beabstandet angeordnet sind. Zur Übertragung einer Lenkbewegung ist die Lenksäule 16 mittels eines Übertragungsmittels 17 mit der Vorderradführung 14 wirkkoppelnd verbunden.

Zusätzlich umfasst der Scooter 10 eine Fußablagenanordnung 13, die eine linke Fußablagefläche 13a und eine rechte Fußablagefläche 13b aufweist. Zur Erzielung einer besonders vorteilhaften Ergonomie und Sicherheit ist die Fußablagenanordnung 13 derart angeordnet, dass die zweite Drehachse D2 die Fußablagenanordnung 13 in einem Schnittpunkt S schneidet und die linke 13a und rechte Fußablagefläche 13b jeweils seitlich zu dem Schnittpunkt S angeordnet sind, wie insbesondere in Fig. 2 dargestellt ist.

In dieser Ausführungsform sind also die erste D1 und zweite Drehachse D2 nicht-koaxial zueinander ausgerichtet, hier: parallel beabstandet zueinander ausgerichtet. Alternativ ist ebenso eine miteinander kreuzende Ausrichtung möglich (nicht dargestellt).

Des Weiteren ist die Fußablagenanordnung 13 in einem ersten, vorderen Abschnitt 18 von dem Schnittpunkt S in Richtung des Steuerrohrs 15 erstreckt. Der erste Abschnitt 18 ist somit in einem Bereich zwischen dem Steuerrohr 15 und der zweiten Drehachse D2 beziehungsweise dem Schnittpunkt S positioniert. Zusätzlich ist die Fußablagenanordnung 13 an einem vorderen Ende 18a mit dem Steuerrohr 15 verbunden, so dass die Fußablagenanordnung 13 ein tragendes Element einer gesamten Fahrzeugstruktur 30 ist, wie zum Beispiel eines Fahrzeugrahmens.

Zusätzlich umfasst die Fußablagenanordnung 13 einen zweiten Abschnitt 19, der zumindest teilweise von dem Schnittpunkt S in Richtung eines Fahrzeughecks des Scooters 10, also in Richtung des Hinterrades 12, erstreckt ist.

In der dargestellten Ausführungsform ist der erste Abschnitt 18 der Fußablagenanordnung 13 um einen ersten Winkel α und der zweite Abschnitt 19 der Fußablagenanordnung 13 um einen zweiten Winkel β gekippt zu einer Fahrzeuglängsrichtung L angeordnet.

Wie in Fig. 2 abgebildet, sind die linke 13a und die rechte Fußablagefläche 13b miteinander verbunden und definieren eine gemeinsame Ablagefläche der Fußablagenanordnung 13.

Gemäß Fig. 2 ist der Schnittpunkt S bezüglich der Fahrzeuglängsrichtung L und bezüglich einer Fahrzeugquerrichtung Q des Scooters im Wesentlichen in der Mitte der gemeinsamen Ablagefläche der Fußablagenanordnung 13 angeordnet. Zusätzlich ist die Fußablagenanordnung 13 derart ausgestaltet, dass eine sich an ein hinteres Ende 20 der Fußablagenanordnung 13 anschließende Fahrzeugstruktur 21 eine geringere Breite b2 aufweist als die Fußablagenanordnung 13, mit einer maximalen Breite b1.

Des Weiteren umfasst die Fußablagenanordnung 13 eine Rohrrahmenanordnung 22, welche zumindest eine seitliche Umfassung der linken 13a und rechten Fußablagefläche 13b bildet. Die Rohrrahmenanordnung 22 bildet somit einen Schutzrahmen der Fußablagenanordnung 13. Hierzu weist die Rohrrahmenanordnung 22 ein linkes 23 und ein rechtes Rohrelement 24 auf, die jeweils mit einem vorderen Ende 23a,24a mit dem Steuerrohr 15 verbunden sind.

Außerdem umfassen das linke 23 und das rechte Rohrelement 24 jeweils ein hinteres Ende 23b,24b, welches mit der Fahrzeugstruktur 21 des Scooters verbunden ist.

## Patentansprüche

1. Scooter (10) mit einer Fußablagenanordnung (13), die eine linke Fußablagefläche (13a) und eine rechte Fußablagefläche (13b) umfasst, sowie mit einer lenkbaren Vorderradführung (14), die in einem Steuerrohr (15) um eine erste Drehachse (D1) drehbar gelagert ist, und einer um eine zweite Drehachse (D2) drehbaren Lenksäule (16), wobei die Lenksäule (16) und die Vorderradführung (14) zueinander beabstandet angeordnet und zum Übertragen einer Lenkbewegung miteinander wirkgekoppelt sind, wobei die zweite Drehachse (D2) die Fußablagenanordnung (13) in einem Schnittpunkt (S) derart schneidet, dass die linke (13a) und rechte Fußablagefläche (13b) jeweils seitlich zu dem Schnittpunkt (S) angeordnet sind, **dadurch gekennzeichnet, dass** die Fußablagenanordnung (13) eine Rohrrahmenanordnung (22) umfasst, welche zumindest eine seitliche Umfassung der linken (13a) und rechten Fußablagefläche (13b) bildet,
wobei die Rohrrahmenanordnung (22) ein linkes (23) und ein rechtes Rohrelement (24) aufweist, die jeweils mit einem vorderen Ende (23a,24a) im Bereich des Steuerrohrs (15) miteinander verbunden sind und/oder mit dem Steuerrohr (15) verbunden sind.

2. Scooter nach Anspruch 1, **dadurch gekennzeichnet, dass** die erste (D1) und zweite Drehachse (D2) parallel beabstandet zueinander oder miteinander kreuzend ausgerichtet sind.

3. Scooter nach Anspruch 1 oder 2, **dadurch gekennzeichnet, dass** die Fußablagenanordnung (13) in einem ersten Abschnitt (18) von dem Schnittpunkt (S) in Richtung des Steuerrohrs (15) erstreckt ausgestaltet ist, insbesondere die Fußablagenanordnung (13) mit einem vorderen Ende (18a) mit dem Steuerrohr verbunden ist.

4. Scooter nach mindestens einem der Ansprüche 1 bis 3, **dadurch gekennzeichnet, dass** die Fußablagenanordnung (13) in einem zweiten Abschnitt (19) von dem Schnittpunkt (S) in Richtung eines Fahrzeughecks des Scooters (10) erstreckt ist.

5. Scooter nach Anspruch 3 und 4, **dadurch gekennzeichnet, dass** der erste Abschnitt (18) der Fußablagenanordnung (13) um einen ersten Winkel (α) und/oder der zweite Abschnitt (19) der Fußablagenanordnung (13) um einen zweiten Winkel (β) gekippt zu einer Fahrzeuglängsrichtung (L) des Scooters (10) angeordnet sind.

6. Scooter nach mindestens einem der Ansprüche 1 bis 5, **dadurch gekennzeichnet, dass** die linke (13a) und die rechte Fußablagefläche (13b) miteinander verbunden sind, um eine gemeinsame Ablagefläche der Fußablagenanordnung (13) zu definieren.

7. Scooter nach Anspruch 6, **dadurch gekennzeichnet, dass** der Schnittpunkt (S) bezüglich der Fahrzeuglängsrichtung (L) und/oder bezüglich einer Fahrzeugquerrichtung (Q) des Scooters (10) im Wesentlichen in der Mitte der gemeinsamen Ablagefläche angeordnet ist.

8. Scooter nach mindestens einem der Ansprüche 1 bis 7, **dadurch gekennzeichnet, dass** eine sich an ein hinteres Ende (20) der Fußablagenanordnung (13) anschließende Fahrzeugstruktur (21) eine geringere zweite Breite (b2) aufweist als eine maximale erste Breite (b1) der Fußablagenanordnung (13).

9. Scooter nach Anspruch 8, **dadurch gekennzeichnet, dass** das linke (23) und das rechte Rohrelement (24) jeweils ein hinteres Ende (23b,24b) aufweisen, welches mit der Fahrzeugstruktur (21) des Scooters (10) verbunden ist.

10. Scooter nach mindestens einem der Ansprüche 1 bis 9, **dadurch gekennzeichnet, dass** der Scooter (10) ein zweirädriger, dreirädriger oder vierrädriger Scooter ist.

## Claims

1. Scooter (10) with a footrest arrangement (13) which comprises a left-hand footrest surface (13a) and a right-hand footrest surface (13b), and with a steerable front wheel steering system (14) which is mounted in a head tube (15) such that it can be rotated about a first rotational axis (D1), and with a steering column (16) which can be rotated about a second rotational axis (D2), the steering column (16) and the front wheel steering system (14) being arranged spaced apart from one another and being operatively connected to one another for the transmission of a steering movement, the second rotational axis (D2) intersecting the footrest arrangement (13) at an intersection point (S) in such a way that the left-hand (13a) and right-hand footrest surface (13b) are arranged in each case laterally with respect to the intersection point (S), **characterized in that** the footrest arrangement (13) comprises a tubular frame arrangement (22) which forms at least one lateral enclosure of the left-hand (13a) and right-hand footrest surface (13b), the tubular frame arrangement (22) having a left-hand (23) and a right-hand tubular element (24) which are connected to one another in each case by way of a front end (23a, 24a) in the region of the head tube (15) and/or are connected to the head tube (15).

2. Scooter according to Claim 1, **characterized in that** the first (D1) and second rotational axis (D2) are oriented so as to be spaced apart in parallel with respect to one another or so as to cross one another.

3. Scooter according to Claim 1 or 2, **characterized in that** the footrest arrangement (13) is configured in a first section (18) so as to extend from the intersection point (S) in the direction of the head tube (15), in particular the footrest arrangement (13) is connected by way of a front end (18a) to the head tube.

4. Scooter according to at least one of Claims 1 to 3, **characterized in that** the footrest arrangement (13) extends in a second section (19) from the intersection point (S) in the direction of a vehicle rear of the scooter (10).

5. Scooter according to Claims 3 and 4, **characterized in that** the first section (18) of the footrest arrangement (13) is arranged tilted by an angle (α) and/or the second section (19) of the footrest arrangement (13) is arranged tilted by a second angle (β) with respect to a vehicle longitudinal direction (L) of the scooter (10).

6. Scooter according to at least one of Claims 1 to 5, **characterized in that** the left-hand (13a) and the right-hand footrest surface (13b) are connected to one another, in order to define a joint rest surface of the footrest arrangement (13).

7. Scooter according to Claim 6, **characterized in that** the intersection point (S) is arranged substantially in the centre of the joint rest surface with regard to the vehicle longitudinal direction (L) and/or with regard to a vehicle transverse direction (Q) of the scooter (10).

8. Scooter according to at least one of Claims 1 to 7, **characterized in that** a vehicle structure (21) which adjoins a rear end (20) of the footrest arrangement (13) has a smaller second width (b2) than a maximum first width (b1) of the footrest arrangement (13).

9. Scooter according to Claim 8, **characterized in that** the left-hand (23) and the right-hand tubular element (24) in each case have a rear end (23b, 24b) which is connected to the vehicle structure (21) of the scooter (10) .

10. Scooter according to at least one of Claims 1 to 9, **characterized in that** the scooter (10) is a two-wheeled, three-wheeled or four-wheeled scooter.

## Revendications

1. Scooter (10), comprenant un ensemble repose-pied (13) qui comprend une surface de repose-pied gauche (13a) et une surface de repose-pied droite (13b), et comprenant un guidage de roue avant dirigeable (14) monté rotatif autour d'un premier axe de rotation (D1) dans un tube de direction (15) et une colonne de direction (16) tournant sur un deuxième axe de rotation (D2), dans lequel la colonne de direction (16) et le guidage de roue avant (14) sont disposés à distance l'un de l'autre et sont couplés l'un à l'autre de manière active pour transmettre un mouvement de direction, dans lequel le deuxième axe de rotation (D2) intersecte l'ensemble repose-pied (13) en un point d'intersection (S) de telle sorte que la surface de repose-pied gauche (13a) et la surface de repose-pied droite (13b) sont disposées respectivement latéralement par rapport au point d'intersection (S), **caractérisé en ce que** l'ensemble repose-pied (13) comprend un ensemble châssis tubulaire (22) formant au moins un pourtour latéral de la surface de repose-pied gauche (13a) et de la surface de repose-pied droite (13b),
dans lequel l'ensemble châssis tubulaire (22) présente un élément tubulaire gauche (23) et un élément tubulaire gauche droit (24) qui sont reliés l'un à l'autre respectivement par une extrémité avant (23a, 24a) au niveau du tube de direction (15) et/ou sont reliés au tube de direction (15).

2. Scooter selon la revendication 1, **caractérisé en ce que** le premier axe de rotation (D1) et le deuxième axe de rotation (D2) sont espacés l'un par rapport à l'autre en parallèle ou orientés en se croisant.

3. Scooter selon la revendication 1 ou 2, **caractérisé en ce que** l'ensemble repose-pied (13) est configuré en s'étendant dans une première partie (18) depuis le point d'intersection (S) vers le tube de direction (15), en particulier **en ce que** l'ensemble repose-pied (13) est relié au tube de direction par une extrémité avant (18a).

4. Scooter selon au moins l'une des revendications 1 à 3, **caractérisé en ce que** l'ensemble repose-pied (13) s'étend dans une deuxième partie (19) depuis le point d'intersection (S) vers une partie arrière de véhicule du scooter (10).

5. Scooter selon les revendications 3 et 4, **caractérisé en ce que** la première partie (18) de l'ensemble repose-pied (13) est disposée avec une inclinaison d'un premier angle (α) et/ou la deuxième partie (19) de l'ensemble repose-pied (13) est disposée avec une inclinaison d'un deuxième angle (β) par rapport à une direction longitudinale de véhicule (L) du scooter (10).

6. Scooter selon au moins l'une des revendications 1 à 5, **caractérisé en ce que** la surface de repose-pied gauche (13a) et la surface de repose-pied droite (13b) sont reliées l'une à l'autre afin de définir une surface de pose commune de l'ensemble repose-pied (13).

7. Scooter selon la revendication 6, **caractérisé en ce que** le point d'intersection (S) est disposé par rapport à la direction longitudinale de véhicule (L) et/ou par rapport à une direction transversale de véhicule (Q) du scooter (10) substantiellement au centre de la surface de pose commune.

8. Scooter selon au moins l'une des revendications 1 à 7, **caractérisé en ce qu'**une structure de véhicule (21) suivant une extrémité arrière (20) de l'ensemble repose-pied (13) présente une deuxième largeur inférieure (b2) à une première largeur maximale (b1) de l'ensemble repose-pied (13).

9. Scooter selon la revendication 8, **caractérisé en ce que** l'élément tubulaire gauche (23) et l'élément tubulaire droit (24) présentent respectivement une extrémité arrière (23b, 24b) qui est reliée à la structure de véhicule (21) du scooter (10).

10. Scooter selon au moins l'une des revendications 1 à 9, **caractérisé en ce que** le scooter (10) est un scooter à deux roues, à trois roues ou à quatre roues.
